# EUROPEAN PATENT SPECIFICATION

(11) **EP 1 903 781 B1**
(45) Date of publication and mention of the grant of the patent: **22.07.2015**
(21) Application number: 07107672.3
(22) Date of filing: 08.05.2007
(51) Int. Cl.: H04N 5/225

(54) **Hinge method and apparatus and electronic device having the same**
Scharnierverfahren und -vorrichtung sowie elektronische Vorrichtung damit
Procédé de charnière et appareil et dispositif électronique équipé de celui-ci

(30) Priority: 19.09.2006 KR 20060090692
(43) Date of publication of application: 26.03.2008
(73) Proprietor: Samsung Electronics Co., Ltd., Suwon-si, Gyeonggi-do, 443-742 (KR)
(72) Inventor: Kim, Nam-il, Jangan-gu, Suwon-si Gyeonggi-do (KR)
(74) Representative: Grünecker Patent- und Rechtsanwälte PartG mbB

(56) References cited:
- EP-A1- 1 507 387
- EP-A1- 1 564 967
- WO-A2-01/84269
- JP-A- 2002 171 189
- JP-A- 2002 374 434
- US-A- 5 982 429
- US-A1- 2002 051 060
- US-A1- 2003 228 847
- US-A1- 2004 100 576

## Description

### BACKGROUND OF THE INVENTION

### 1. Field of the Invention

The present general inventive concept relates to a hinge method and apparatus and an electronic device having the same.

### 2. Description of the Related Art

Generally, a hinge apparatus connects a plurality of electronic units to be rotatable in plural directions with respect to each other.

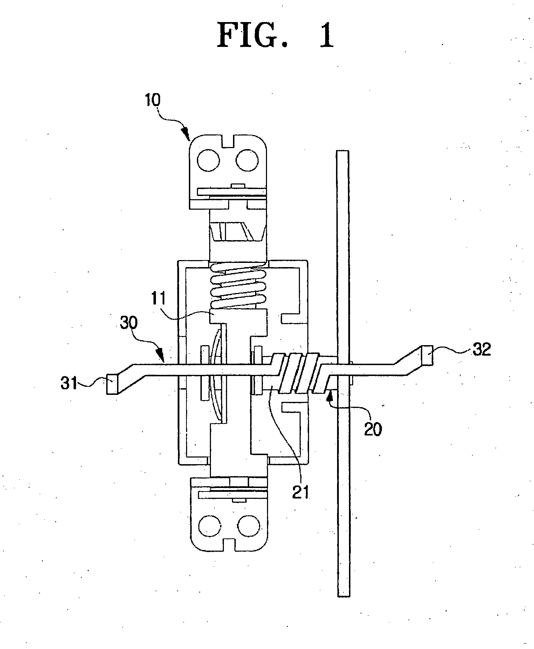

As illustrated in FIG. 1, a general hinge apparatus includes a first hinge unit 10, a second hinge unit 20, and a flexible printed circuit board (FPCB) 30. The first hinge unit 10 is provided with a first hinge shaft 11 rotatably connected to a main body (not illustrated). The second hinge unit 20 is provided with a second hinge shaft 21, which couples a display unit (not illustrated) to be rotatable at right angles to the first hinge shaft 11. The FPCB 30 electrically connects the main body and the display unit with each other and has connectors 31 and 32 at both ends thereof. The FPCB 30 is configured, so that after it winds several times, preferably, 2.5 times, around the second hinge shaft 21, the connectors 31 and 32 are connected to connectors disposed on the main body and the display unit, respectively.

The hinge apparatus constructed as described above enables the display unit to rotate in first and the second hinge shaft directions around the first and second hinge shafts 11 and 21, respectively, with respect to the main body. Accordingly, even though a user uses the electronic device with various postures, the user can easily watch images, which are reproduced on the display unit.

However, since the FPCB 30 is wound several times around the second hinge shaft 21 and then electrically connected to the main body and the display unit, a problem may occur, in that the FPCB 30 is twisted and damaged in a rotation of the display unit with respect to the main body.

Also, since the FPCB 30 acts as an antenna, the electronic device is adversely influenced by an electromagnetic interference (EMI).

WO 01/84269 A2 discloses a joint which connects a first element to a second element. The joint comprises a connector element as well as shafts mounted at the end of the connector element.

JP 2002 374 434 A refers to an electronic device with a first case and a second case, which are rotatably connected to each other.

EP 1 507 387 A1 refers to a mobile radio communication apparatus with a hinge part that foldably connects a second housing to a first housing.

EP 1 564 967 A1 refers to a mobile device with a display housing which is movably connected to an operation housing.

US 2003/228847 A1 refers to a portable communication device with a main body and a display section.

US 2004/100576 A1 refers to a hinge for an LCD monitor of a video movie camera. The hinge comprises a horizontal axle and a vertical axle.

US 2002/051060 A1 and JP 2002 171 189 A each disclose a hinge unit for a mobile telephone with a T-shaped hinge member.

US 5 982 429 A discloses a video camera with a body, onto which an LCD display is pivotally mounted through a coupling device.

It is the object of the present invention to provide a hinge apparatus with a compact design and which also enables several rotation directions between a first and a second electronic unit connected by the hinge apparatus, wherein a signal connecting unit of the hinge apparatus should not be damaged.

This object can be solved with the technical features of claim 1 or with the technical features of independent claim 20. Improved embodiments of the invention are provided by the subject matter of the dependent claims.

### SUMMARY OF THE INVENTION

The present general inventive concept provides a hinge method and apparatus to prevent damage to a signal connecting unit, which electrically connects a plurality of electronic units with each other, when the plurality of electronic units is rotated in plural directions with respect to each other, and to minimize an EMI influence, and an electronic device having the hinge apparatus.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept may be achieved by providing a hinge apparatus including a first hinge unit having a first hinge shaft rotatably connected to a first electronic unit, a second hinge unit having a second hinge shaft connected to a second electronic unit and to be rotatable in a predetermined angle to the first hinge shaft, the second hinge shaft having a hollow, and a signal connecting unit inserted into the hollow of the second hinge unit to electrically connect the first and the second electronic units with each other.

The first hinge shaft may have a coupling hole into which the second hinge shaft is rotatably coupled.

The hinge apparatus may further include a rotation controlling unit to restrict a rotation range of the second hinge unit in a relative rotation of the second hinge unit to the first hinge unit.

The rotation controlling unit may include a first bracket fixed to the first hinge shaft and having a first hanging projection, and a stopper fixed to the second hinge shaft and having a second hanging projection to come in contact with the first hanging projection during a rotation thereof.

The hinge apparatus may further include a shock-absorbing unit to absorb a shock caused by the contact between the first and the second hanging projections.

The shock-absorbing unit may include a second bracket fixed to the first bracket and formed with elastic pieces, so that the elastic pieces are disposed at both sides of the first hanging projection.

The hinge apparatus may further include a supporting member to accommodate the second hinge shaft therethrough and thus to support the stopper in a first bracket direction.

The hinge apparatus may further include a hinge casing to surround outer parts of the first hinge unit, the second hinge unit, and the signal connecting unit which are exposed between the first and the second electronic units.

The signal connecting unit may include a coaxial cable having a portion disposed in the hollow of the second hinge shaft.

The coaxial cable at both ends thereof may have connectors connected with first and second connectors of the first and the second electronic units, respectively.

The first electronic unit may be a main body to generate a signal, and the second electronic unit may be a display unit to display an image corresponding to the signal.

Alternatively, the first electronic unit may be a display unit to display an image, and the second electronic unit may be a main body to generate a signal to contact the display unit to display the image.

The foregoing and/or other aspects and utilities of the present general inventive concept may also be achieved by providing an electronic device including a first electronic unit, a second electronic unit, and a hinge apparatus as described above to connect the first and the second electronic units to be rotatable in plural directions with respect to each other.

The foregoing and/or other aspects and utilities of the present general inventive concept may also be achieved by providing a method of rotatably supporting an electronic device having a main body and a display unit, the method including providing a first hinge unit having a first hinge shaft rotatably connected to the main body, providing a second hinge unit having a second hinge shaft with a hollow to rotatably connect the main body and the display to each other, the second hinge shaft being rotatable at a predetermined angle with respect to the first hinge shaft, and inserting a signal connecting unit into the hollow of the second hinge unit to electrically connect the main body and the display unit with each other.

The foregoing and/or other aspects and utilities of the present general inventive concept may also be achieved by providing a hinge apparatus including a first hinge unit rotatably connected to a first electronic unit in a first direction with respect to the first electronic unit, a second hinge unit rotatably coupled to the first hinge unit in a second direction with respect to the first electronic unit, and having a hollow, and a signal connecting unit having a portion disposed in the hollow and ends extended from the portion and connected to the first electronic unit and a second electronic unit, respectively.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:q

FIG. 1 is a schematic view illustrating a general hinge apparatus;

FIG. 2 is a perspective view illustrating a hinge apparatus according to an exemplary embodiment of the present general inventive concept;

FIG. 3 is an exploded perspective view illustrating the hinge apparatus of FIG. 2;

FIG. 4 is a view illustrating a connected state of a coaxial cable of the hinge apparatus of FIGS. 2 and 3;

FIGS. 5A and 5B are views illustrating a rotation range of a rotation controlling unit of FIG. 3;

FIGS. 6A and 6B are views illustrating a shock-absorbing unit provided in the rotation controlling unit of FIG. 3; and

FIG. 7 is a perspective view illustrating an electronic device having a hinge apparatus according to an embodiment of the present general inventive concept.

Throughout the drawings, the same drawing reference numerals will be understood to refer to the same elements, features, and structures.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

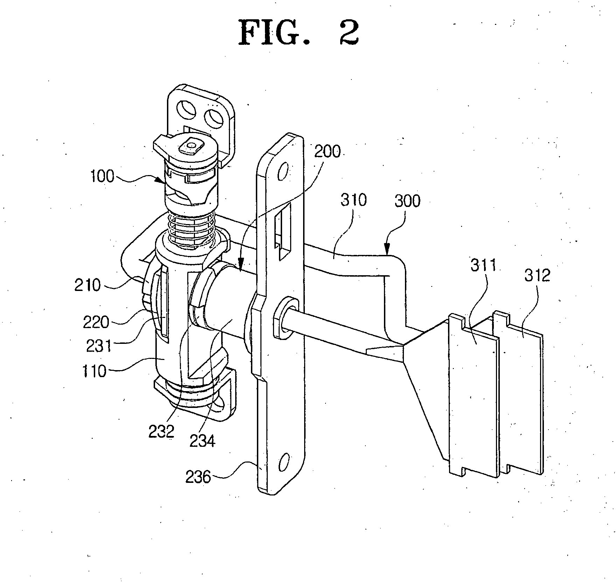

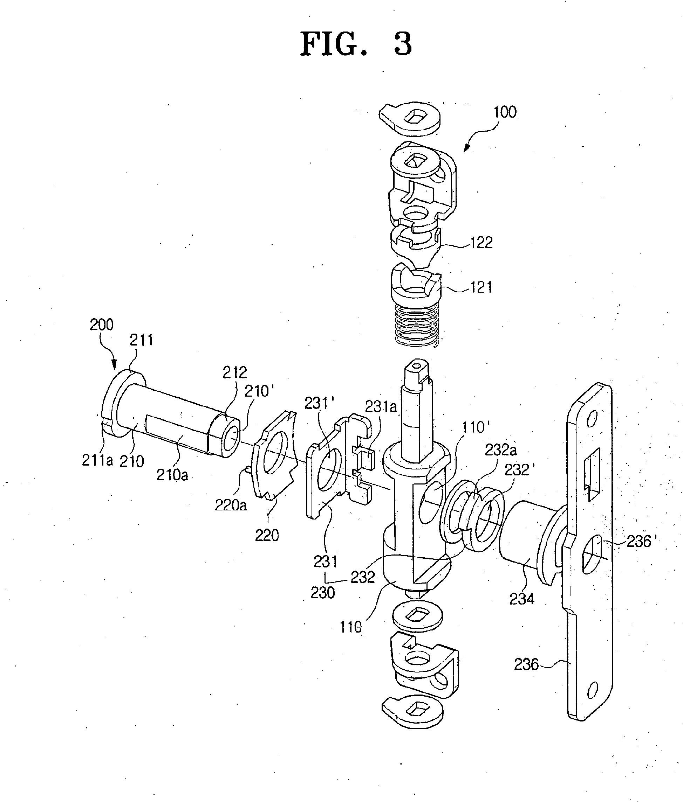

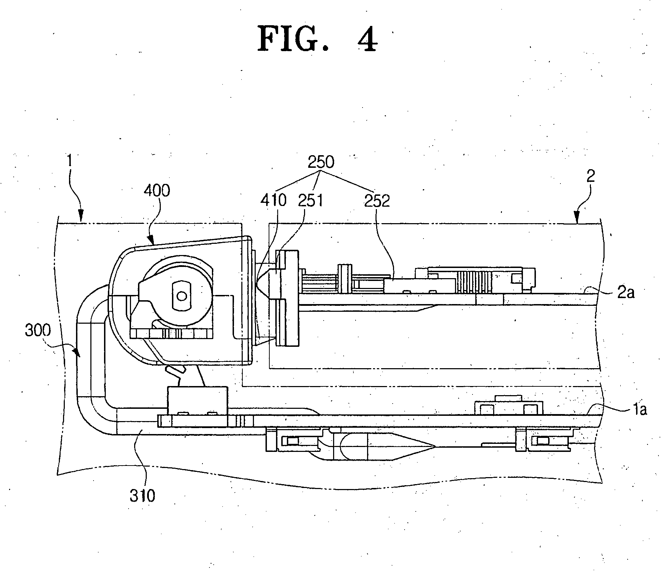

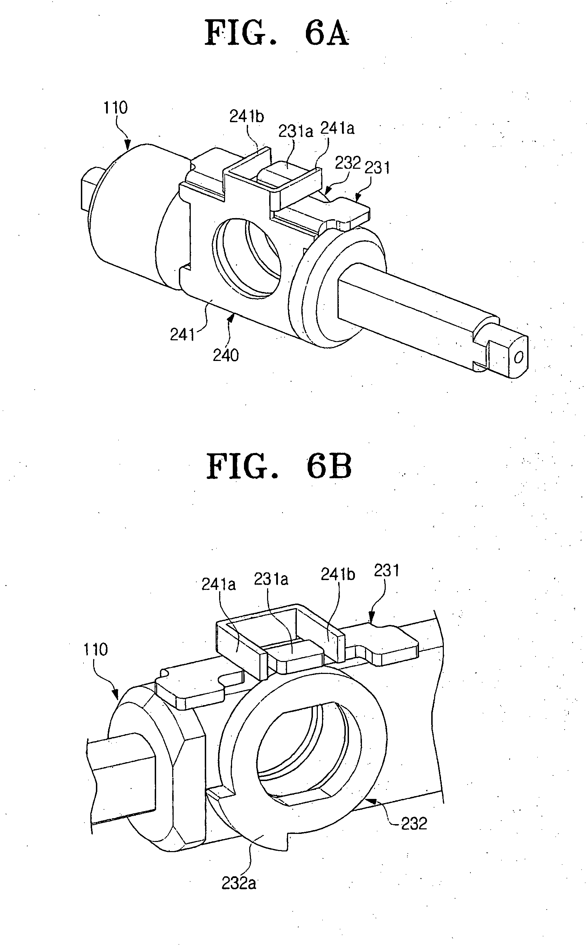

FIG. 2 is a perspective view illustrating a hinge apparatus according to an exemplary embodiment of the present general inventive concept, FIG. 3 is an exploded perspective view illustrating the hinge apparatus of FIG. 3, FIG. 4 is a view illustrating a connected state of a coaxial cable of the hinge apparatus of FIGS. 2 and 3, FIGS. 5A and 5B are views illustrating a rotation range of a rotation controlling unit of FIG. 3, and FIGS. 6A and 6B are views illustrating a shock-absorbing unit provided in the rotation controlling unit of FIG. 3.

As illustrated in FIGS. 2 through 6, the hinge apparatus according to the exemplary embodiment of the present general inventive concept includes a first hinge unit 100, a second hinge unit 200, a signal connecting unit 300 and a hinge casing 400. In the exemplary embodiment of the present general inventive concept described herein, to contribute to the understanding, the hinge apparatus is explained as applied to a structure where first and second electronic units are a main body 1 and a display unit 2 (see FIG. 4), respectively, but the present general inventive concept is not limited thereto. For instance, contrary to the exemplary embodiment described herein, the hinge apparatus may be applicable to a structure where the first and second electronic units are a display unit 2 and a main body 1, respectively. Here, the main body 1 generates a signal to be transmitted to the display unit 2 through a cable, so then an image is displayed on the display unit according to the transmitted signal. The display unit 2 may rotate in a first direction with respect to the first hinge unit 100 and in a second direction with respect to the second hinge unit 200.

The first hinge unit 100 is provided with a first hinge shaft 110 rotatably connected to the main body 1, and first and second cams 121 and 122 to give a sense of click in a rotation of a first hinge shaft 110 with respect to the main body 1. The first hinge shaft 110 has a circle-shaped coupling hole 110' disposed in a direction parallel to an axial direction of a second hinge shaft 210, so that the second hinge shaft 210 to be described later is inserted into and rotatably coupled to the coupling hole 110'. Preferably, but not necessarily, an inner diameter of the coupling hole 110' is formed slightly larger than an outer diameter of the second hinge shaft 210.

The second hinge unit 200 has a second hinge shaft 210 inserted into and rotatably coupled to the coupling hole 110' of the first hinge shaft 110, so that the display unit 2 is rotatable at a predetermined angle to the first hinge shaft 110. The predetermined angle may be a right angle. The second hinge shaft 210 is formed in the shape of a pipe with a hollow 210'. The second hinge shaft 210 at one end thereof has a head 211 with an outer diameter larger than the inner diameter of the coupling hole 110', and at another end thereof has a stepped projection 212, so that it is inserted into and fixed to a hole 236' of a liquid crystal display (LCD) bracket 236. On an outer circumferential surface of the second hinge shaft 210 is formed a flat cutting plane 210a, which unrotatably fixes a stopper 232 and a supporting member 234 to be described later when the second hinge shaft 210 is inserted therein.

The second hinge unit 200 is provided with a projection 220a formed on a click bracket 220 to give a sense of click in a rotation of the second hinge shaft 210 with respect to the first hinge shaft 110, and a projection receiving groove 211a formed on the head 211 to accommodate the projection 220a. The click bracket 220 accommodates the second hinge shaft 210 therethrough and is fixed to a first bracket 231 to be described later.

According to the exemplary embodiment of the present general inventive concept, the hinge apparatus further includes a rotation controlling unit 230 to restrict a rotation range of the second hinge unit 200 in the relative rotation of the second hinge unit 200 to the first hinge shaft 110. That is, the rotation controlling unit 230 prevents the signal connecting unit 300 from being twisted and damaged due to an excessive rotation or an endless rotation in one direction of the display unit 2 to the main body 1.

The rotation controlling unit 230 is provided with a first bracket 231 and a stopper 232.

The first bracket 231 at the middle thereof has a hole 231', and at a side thereof bent at right angles has a first hanging projection 231 a. The first bracket 231 accommodates the second hinge shaft 210 through the hole 231', so that the first hanging projection 231a thereof faces the stopper 232, and is fixed coming in close contact with a side of the first hinge shaft 110.

The stopper 232, which is formed in a shape of a circle rib, has a hole 232' at a middle thereof. On the most outside of the stopper 232 is formed a second hanging projection 232a to come in contact with the first hanging projection 231a in a rotation thereof. The stopper 232 accommodates the second hinge shaft 210 therethrough and is fixed to the second hinge shaft 210 at another side of the first hinge shaft 110. The stopper 232 is supported in a first bracket direction by the supporting member 234, which accommodates the second hinge shaft 210 between the stopper 232 and the LCD bracket 236.

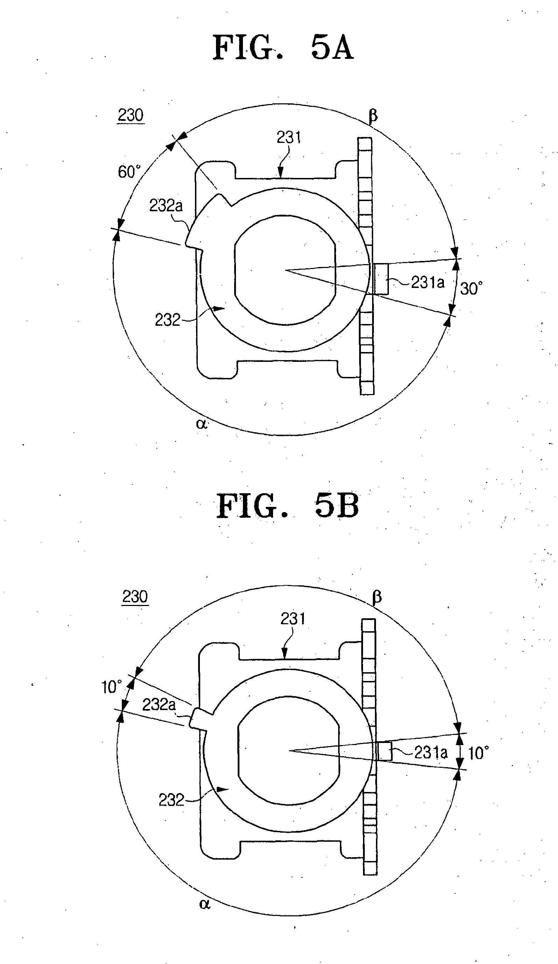

A range of relative rotation of the second hinge shaft 210 with respect to the first hinge shaft 110 is determined by an angle where the first and the second hanging projections 231a a and 232a occupy a same space together about the second hinge shaft 210. The same space may be an angle in a circumferential direction with respect to a rotation center of the second hinge shaft 210. For instance, as illustrated in FIG. 5A, if the first and the second hanging projections 231 a and 232a are formed in ranges of 30° and 60° about the second hinge shaft 210, respectively, the range of the relative rotation of the second hinge shaft 210 with respect to the first hinge shaft 110 comes to 270° (α+β) except for 90° where the first and the second hanging projections 231a and 232a occupy the same space together. Accordingly, the second hinge shaft 210 comes to be rotatable in a range of 270°. Also, as illustrated in FIG. 5B, if the first and the second hanging projections 231a and 232a are formed in ranges of 10° about the second hinge shaft 210, respectively, the range of the relative rotation of the second hinge shaft 210 to the first hinge shaft 110 comes to 340° (α+β) except for 20° where the first and the second hanging projections 231a and 232a occupy the same space together. Accordingly, the second hinge shaft 210 comes to be rotatable in a range of 340°. Thus, by changing the angle where the first and the second hanging projections 231a and 232a occupy the same space together about the second hinge shaft 210, the range of the relative rotation of the second hinge shaft 210 to the first hinge shaft 110 can be determined.

As illustrated in FIGS. 6A and 6B, the hinge apparatus according to the exemplary embodiment of the present general inventive concept further includes a shock-absorbing unit 240 to absorb a shock caused by a contact between the first and the second hanging projections 231 a and 232a. The shock-absorbing unit 240 is made up of a second bracket 241 fixed to the first bracket 231, so that elastic pieces 241a and 241 b thereof are disposed at both sides of the first hanging projection 231a. The present general inventive concept is not limited to that, however. For instance, the shock-absorbing unit 240 can be made up of first hanging projection 231a and/or second hanging projection 232a formed with a predetermined elastic element. The elastic pieces 241a and 241 b may be extended from the second bracket 241 between the second hanging projection 232a and the first hanging projection 231a, so that the second hanging projection 232a first contacts the elastic piece 241 a or 241 b to absorb the shock by the elastic piece 241 a or 241 b when the second hanging projection 232a approaches the first hanging projection 231a.

As illustrated in FIG. 4, the hinge apparatus according to the exemplary embodiment of the present general inventive concept, the hinge apparatus further includes a detector unit 250 to reverse images reproduced on the display unit 2 when the display unit 2 is rotated and positioned in a predetermined position with respect to the main body 1. The detector unit 250 includes a cam 410 formed on the hinge casing 400, an operating knob 251 to comes in contact with the cam 410 thus to move in front and in the rear, and a detector switch 252 operable by the operating knob 251. Since a construction and a function of the detector unit 250 as described above are the same as those of the detector unit known in the art, detailed descriptions thereof will be omitted for clarity and conciseness.

Referring to FIGS. 2, 3, and 4, the signal connecting unit 300 includes a coaxial cable 310 inserted into the hollow 210' of the second hinge shaft 210 to electrically connect the main body 1 and the display unit 2 with each other. The coaxial cable 310 is made of a plurality of signal lines tied into a bundle, and at both ends thereof has connectors 311 and 312 connected with first and second connectors (not illustrated), which are disposed on a printed circuit board (PCB) 1a of the main body 1 and a PCB 2a of the display unit 2, respectively. The connectors 311 and 312 may be built in small PCBs and integrally formed with the coaxial cable 310. A shape of the coaxial cable 310 can be variously modified according to positions of the first and second connectors (not illustrated) disposed on the main body 1 and the display unit 2. Since a construction of the coaxial cable 310 and a connected structure between the coaxial cable 310 and the connectors 311 and 312 are the same as those known in the art, detailed descriptions thereof will be omitted.

The hinge casing 400 is disposed to surround outer parts of the first hinge unit 100, the second hinge unit 200 and the signal connecting unit 300, which are exposed between the main body 1 and the display unit 2.

The hinge apparatus according to the exemplary embodiment of the present general inventive concept constructed as described above enables the display unit 2 to rotate in first and second directions around first and second hinge shafts 110 and 210, respectively, with respect to the main body 1. Accordingly, even though a user uses the electronic device with various postures, she or he can watch easily the images, which are reproduced on the display unit 2.

Further, the hinge apparatus according to the exemplary embodiment of the present general inventive concept is configured, so that the hollow 210' is formed in the second hinge shaft 210 and thus the signal connecting unit 300 is inserted into the hollow 210' to electrically connect the main body 1 and the display unit 2 with each other. Accordingly, the hinge apparatus according to the exemplary embodiment of the present general inventive concept can prevent the signal connecting unit 300 from being twisted and damaged in a rotation of the display unit 2 to the main body 1.

Also, the hinge apparatus according to the exemplary embodiment of the present general inventive concept does not use the conventional FPCB 20 (see FIG. 1), but the coaxial cable 310 as the signal connecting unit 300. Accordingly, the hinge apparatus according to the exemplary embodiment of the present general inventive concept can minimize EMI influence.

Also, because of a flexibility of material, the coaxial cable 310 can be changed to be in various shapes or adjusted to be in various lengths. Accordingly, the coaxial cable 310 can be freely connected to the connectors disposed on the main body 1 and the display unit 2, respectively, according to positions thereof. Thus, the hinge apparatus according to the exemplary embodiment of the present general inventive concept can reduce a loss of circuit space, and improve a degree of freedom in product design.

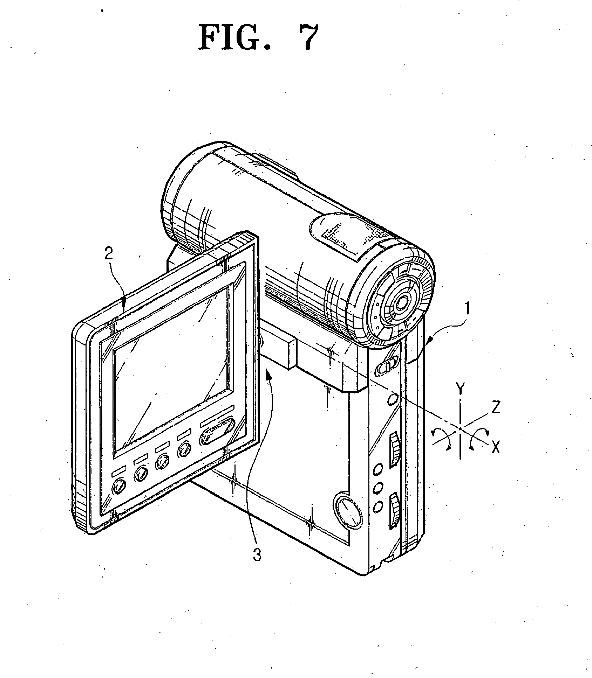

According to another exemplary embodiment of the present general inventive concept, as illustrated in FIG. 7, an electronic device includes a main body 1, a display unit 2, and a hinge apparatus 3 having the construction as described above in FIGS. 2 through 6 to connect the main body 1 and the display unit 2 to be rotatable in plural directions (i.e., directions X, Y, and Z) with respect to each other.

The electronic device having the hinge apparatus 3 according to another exemplary embodiment of the present general inventive concept is applicable to an image photographing device, such as a still camera, a motion image camera, a camcorder or the like, and other kind of electronic devices, such as a mobile phone, a personal digital assistant (PDA), a notebook PC, flat (LCD or PDP) display apparatus, or the like, including the display unit 2 rotatable in the plural directions.

As apparent from the foregoing description, according to the exemplary embodiments of the present general inventive concept, the hinge apparatus and the electronic device having the same are configured, so that the hinge shaft of the display unit is formed of the shaft with a hollow and thus the signal connecting unit is inserted into the hollow to electrically connect the main body and the display unit with each other. Accordingly, the hinge apparatus and the electronic device having the same according to the exemplary embodiments of the present general inventive concept can prevent the signal connecting unit from being twisted and damaged in the rotation of the display unit to the main body.

Also, the hinge apparatus and the electronic device having the same according to the exemplary embodiments of the present general inventive concept does not use the conventional FPCB, but the coaxial cable as the signal connecting unit. Accordingly, the hinge apparatus and the electronic device having the same according to the exemplary embodiments of the present general inventive concept can minimize the EMI influence.

Although a few embodiments of the present general inventive concept have been shown and described, it will be appreciated by those skilled in the art that changes may be made in these embodiments without departing from the scope defined in the appended claims.

## Claims

1. A hinge apparatus comprising:
a first hinge unit (100) having a first hinge shaft (110) connected to a first electronic unit;
a second hinge unit (200) having a second hinge shaft (210) connected to a second electronic unit and to be rotatable in a predetermined angle with respect to the first hinge shaft (110), the second hinge shaft (210) having a hollow (210'); and
a signal connecting unit (300) inserted into the hollow (210') of the second hinge unit (200) to electrically connect the first and the second electronic units with each other,
wherein
the first hinge shaft (110) has a coupling hole (110') into which the second hinge shaft (210) is rotatably coupled,
the first hinge shaft (110) is rotatably connected to the first electronic unit, and
**characterized in that**
the second hinge shaft (210) passes completely through the first hinge shaft (110).

2. The apparatus as claimed in claim 1, further comprising:
a rotation controlling unit (230) to restrict a rotation range of the second hinge unit (200) in a relative rotation of the second hinge unit (200) to the first hinge unit (100).

3. The apparatus as claimed in claim 2, wherein the rotation controlling unit (230) comprises:
a first bracket (231) fixed to the first hinge shaft (110) and having a first hanging projection (231 a); and
a stopper (232) fixed to the second hinge shaft (210) and having a second hanging projection (232a) to come in contact with the first hanging projection (231 a) in a rotation thereof.

4. The apparatus as claimed in claim 3, further comprising:
a shock-absorbing unit (240) to absorb a shock caused by a contact between the first and the second hanging projections (231 a, 232a).

5. The apparatus as claimed in claim 4, wherein the shock-absorbing unit (240) comprises:
a second bracket (241) fixed to the first bracket (231) and formed with elastic pieces (241 a, 241 b), so that the elastic pieces (241 a, 241 b) are disposed at both sides of the first hanging projection (231 a).

6. The apparatus as claimed in claim 4, further comprising:
a supporting member (234) to accommodate the second hinge shaft (210) therethrough and thus to support the stopper (232) in a first bracket direction.

7. The apparatus as claimed in claim 1, further comprising:
a hinge casing (400) to surround outer parts of the first hinge unit (100), the second hinge unit (200) and the signal connecting unit (300), which are exposed between the first and the second electronic units.

8. The apparatus as claimed in claim 1, wherein the signal connecting unit (300) comprises a coaxial cable (310) having a portion disposed in the hollow (210') of the second hinge shaft (210).

9. The apparatus as claimed in claim 8, wherein the coaxial cable (310) at both ends thereof has connectors (311,312) connected with first and second connectors of the first and the second electronic units, respectively.

10. The apparatus as claimed in claim 1, wherein the first electronic unit comprises a main body (1) to generate an image, and the second electronic unit comprises a display unit (2) to display the image corresponding to the signal.

11. The apparatus as claimed in claim 1, wherein the first electronic unit comprises a display unit (2) to display an image, and the second electronic unit comprises a main body (1) to generate a signal to control the display unit (2) to display the image.

12. The apparatus as claimed in claim 1, wherein the hollow (210') is formed in a longitudinal direction of the second hinge unit (200).

13. The apparatus as claimed in claim 1, wherein a portion of the signal connecting unit (300) is rotatably disposed in the hollow (210').

14. An electronic device with a hinge apparatus according to one of the previous claims comprising:
a first electronic unit;
a second electronic unit; and
the hinge apparatus to connect the first and the second electronic units to be rotatable in plural directions with respect to each other.

15. The device as claimed in claim 14, wherein the first electronic unit comprises a main body (1), and the second electronic unit comprises a display unit (2).

16. The device as claimed in claim 14, wherein the first electronic unit comprises a display unit (2), and the second electronic unit comprises a main body (1).

17. The device as claimed in claim 15, wherein the first electronic unit further comprises one of an image photographing device, a mobile phone, a personal digital assistant (PDA), and a notebook personal computer (PC).

18. The device as claimed in claim 16, wherein the second electronic unit further comprises one of an image photographing device, a mobile phone, a personal digital assistant (PDA), and a notebook personal computer (PC).

19. The device with the apparatus as claimed in claim 4, wherein one or more of the first hanging projection (231 a), the second hanging projection (232a), and the shock-absorbing unit (240) comprise a predetermined elastic element.

20. A method of rotatably supporting an electronic device having a main body (1) and a display unit (2), the method comprising:
providing a first hinge unit (100) having a first hinge shaft (110) rotatably connected to the main body (1);
providing a second hinge unit (200) having a second hinge shaft (210) with a hollow (210') to rotatably connect the main body (1) and the display (2) to each other, the second hinge shaft (210) being rotatable at a predetermined angle with respect to the first hinge shaft (110); and
inserting a signal connecting unit (300) into the hollow (210') of the second hinge unit (210) to electrically connect the main body (1) and the display unit (2) with each other, wherein the providing of the first hinge unit (100) and the second hinge unit (200) comprises inserting the second hinge shaft (210) through a coupling hole (110') of the first hinge shaft (110), and wherein the coupling hole (110') passes completely through the first hinge shaft (110).

21. The method of claim 20, further comprising:
absorbing a shock caused by a contact between a first and a second hanging projections (231a,232a) of a rotation controlling unit (230).

## Patentansprüche

1. Scharniervorrichtung, die umfasst:
eine erste Scharniereinheit (100), die eine erste Scharnierwelle (110) aufweist, die mit einer ersten elektronischen Einheit verbunden ist;
eine zweite Scharniereinheit (200), die eine zweite Scharnierwelle (210) aufweist, die mit einer zweiten elektronischen Einheit verbunden ist und in einem vorgegebenen Winkel in Bezug auf die erste Scharnierwelle (110) gedreht werden kann, wobei die zweite Scharnierwelle (210) einen Hohlraum (210') hat; und
eine Signal-Verbindungseinheit (300), die in den Hohlraum (210') der zweiten Scharniereinheit (200) eingeführt ist, um die erste und die zweite elektronische Einheit elektrisch miteinander zu verbinden,
wobei die erste Scharnierwelle (110) ein Kopplungs-Loch (110') hat, mit dem die zweite Scharnierwelle (210) drehbar gekoppelt ist,
die erste Scharnierwelle (110) drehbar mit der ersten elektronischen Einheit verbunden ist, und
**dadurch gekennzeichnet, dass**
die zweite Scharnierwelle (210) vollständig durch die erste Scharnierwelle (110) hindurchtritt.

2. Vorrichtung nach Anspruch 1, die des Weiteren umfasst:
eine Drehungs-Steuereinheit (230), die einen Drehungsbereich der zweiten Scharniereinheit (200) bei Drehung der zweiten Scharniereinheit (200) relativ zu der ersten Scharniereinheit (100) einschränkt.

3. Vorrichtung nach Anspruch 2, wobei die Drehungs-Steuereinheit (230) umfasst:
einen ersten Halter (231), der an der ersten Scharnierwelle (110) befestigt ist und einen ersten hängenden Vorsprung (231 a) hat; sowie
einen Anschlag (232), der an der zweiten Scharnierwelle (210) befestigt ist und einen zweiten hängenden Vorsprung (232a) hat, der bei einer Drehung des ersten hängenden Vorsprungs (231a) in Kontakt mit diesem kommt.

4. Vorrichtung nach Anspruch 3, die des Weiteren umfasst:
eine Stoßdämpfeinheit (240), die einen Stoß dämpft, der durch Kontakt zwischen dem ersten und dem zweiten hängenden Vorsprung (231a, 232a) verursacht wird.

5. Vorrichtung nach Anspruch 4, wobei die Stoßdämpfeinheit (240) umfasst:
einen zweiten Halter (241), der an dem ersten Halter (231) befestigt und so mit elastischen Teilen (241 a, 241 b) versehen ist, dass die elastischen Teile (241 a, 241 b) an beiden Seiten des ersten hängenden Vorsprungs (231 a) angeordnet sind.

6. Vorrichtung nach Anspruch 4, die des Weiteren umfasst:
ein Lagerungselement (234), über das die zweite Scharnierwelle (210) aufgenommen ist,
und so der Anschlag (232) in einer Richtung des ersten Halters gelagert ist.

7. Vorrichtung nach Anspruch 1, die des Weiteren umfasst:
ein Scharniergehäuse (400), das äußere Teile der ersten Scharniereinheit (100), die zweite Scharniereinheit (200) und die Signal-Verbindungseinheit (300) umschließt, die zwischen der ersten und der zweiten elektronischen Einheit freiliegen.

8. Vorrichtung nach Anspruch 1, wobei die Signal-Verbindungseinheit (300) ein Koaxialkabel (310) umfasst, das einen Abschnitt hat, der in dem Hohlraum (210') der zweiten Scharnierwelle (210) angeordnet ist.

9. Vorrichtung nach Anspruch 8, wobei das Koaxialkabel (310) an seinen beiden Enden Verbinder (311, 312) aufweist, die mit einem ersten und einem zweiten Verbinder der ersten bzw. der zweiten elektronischen Einheit verbunden sind.

10. Vorrichtung nach Anspruch 1, wobei die erste elektronische Einheit einen Hauptkörper (1) zum Erzeugen eines Bildes umfasst und die zweite elektronische Einheit eine Anzeigeeinheit (2) zum Anzeigen des dem Signal entsprechenden Bildes umfasst.

11. Vorrichtung nach Anspruch 1, wobei die erste elektronische Einheit eine Anzeigeeinheit (2) zum Anzeigen eines Bildes umfasst und die zweite elektronische Einheit einen Hauptkörper (1) zum Erzeugen eines Signals umfasst, mit dem die Anzeigeeinheit (2) so gesteuert wird, dass sie das Bild anzeigt.

12. Vorrichtung nach Anspruch 1, wobei der Hohlraum (210') in einer Längsrichtung der zweiten Scharniereinheit (200) ausgebildet ist.

13. Vorrichtung nach Anspruch 1, wobei ein Abschnitt der Signal-Verbindungseinheit (300) drehbar in dem Hohlraum (210') angeordnet ist.

14. Elektronisches Gerät mit einer Scharniervorrichtung nach einem der vorangehenden Ansprüche, das umfasst:
eine erste elektronische Einheit;
eine zweite elektronische Einheit; und
die Scharniervorrichtung, die die erste und die zweite elektronische Einheit so verbindet, dass sie in mehreren Richtungen zueinander gedreht werden können.

15. Gerät nach Anspruch 14, wobei die erste elektronische Einheit einen Hauptkörper (1) umfasst und die zweite elektronische Einheit eine Anzeigeeinheit (2) umfasst.

16. Gerät nach Anspruch 14, wobei die erste elektronische Einheit eine Anzeigeeinheit (2) umfasst und die zweite elektronische Einheit einen Hauptkörper (1) umfasst.

17. Gerät nach Anspruch 15, wobei die erste elektronische Einheit des Weiteren ein Bild-Fotografiergerät, ein Mobiltelefon, einen PDA (personal digital assistant) oder einen Notebook-Personalcomputer (PC) umfasst.

18. Gerät nach Anspruch 16, wobei die zweite elektronische Einheit des Weiteren ein Bild-Fotografiergerät, ein Mobiltelefon, einen PDA (personal digital assistant) oder einen Notebook-Personalcomputer (PC) umfasst.

19. Gerät mit der Vorrichtung nach Anspruch 4, wobei der erste hängende Vorsprung (231a), der zweite hängende Vorsprung (232a) oder/und die Stoßdämpfeinheit (240) ein vorgegebenes elastisches Element umfasst/umfassen.

20. Verfahren zum drehbaren Lagern eines elektronischen Gerätes, das einen Hauptkörper (1) und eine Anzeigeeinheit (2) aufweist, wobei das Verfahren umfasst:
Bereitstellen einer ersten Scharniereinheit (100), die eine erste Scharnierwelle (110) aufweist, die drehbar mit dem Hauptkörper (1) verbunden ist;
Bereitstellen einer zweiten Scharniereinheit (200), die eine zweite Scharnierwelle (210) mit einem Hohlraum (210') aufweist, um den Hauptkörper (1) und die Anzeigeeinrichtung (2) drehbar miteinander zu verbinden, wobei die zweite Scharnierwelle (210) in einem vorgegebenen Winkel in Bezug auf die erste Scharnierwelle (110) gedreht werden kann; und
Einführen einer Signal-Verbindungseinheit (300) in den Hohlraum (210') der zweiten Scharniereinheit (210), um den Hauptkörper (1) und die Anzeigeeinheit (2) elektrisch miteinander zu verbinden, wobei das Bereitstellen der ersten Scharniereinheit (100) und der zweiten Scharniereinheit (200) umfasst, dass die zweite Scharnierwelle (210) durch ein Kopplungsloch (110') der ersten Scharnierwelle (110) eingeführt wird, und
das Kopplungsloch (110') vollständig durch die erste Scharnierwelle (110) hindurch verläuft.

21. Verfahren nach Anspruch 20, das des Weiteren umfasst:
Dämpfen eines Stoßes, der durch einen Kontakt zwischen einem ersten und einem zweiten hängenden Vorsprung (231a, 232a) einer Drehungs-Steuereinheit (230) verursacht wird.

## Revendications

1. Appareil à charnière comprenant :
- une première unité de charnière (100) comportant un premier arbre de charnière (110) connecté à une première unité électronique ;
- une seconde unité de charnière (200) comportant un second arbre de charnière (210) connecté à une seconde unité électronique et susceptible d'être rotative sur un angle prédéterminé par rapport au premier arbre de charnière (110), le second arbre de charnière (210) comportant un creux (210') ; et
- une unité de connexion de signal (300) insérée dans le creux (210') de la seconde unité de charnière (200) afin de connecter électriquement la première et la seconde unités électroniques l'une à l'autre ;
- dans lequel :
- le premier arbre de charnière (110) comporte un trou de couplage (110') dans lequel le second arbre de charnière (210) est couplé de façon rotative ;
- le premier arbre de charnière (110) est connecté de façon rotative à la première unité électronique ; et
- **caractérisé en ce que** :
- le second arbre de charnière (210) passe complètement à travers le premier arbre de charnière (110).

2. Appareil selon la revendication 1, comprenant en outre :
- une unité de commande de rotation (230) pour restreindre une plage de rotation de la seconde unité de charnière (200) en une rotation relative de la seconde unité de charnière (200) par rapport à la première unité de charnière (100).

3. Appareil selon la revendication 2, dans lequel l'unité de commande de rotation (230) comprend :
- un premier support (231) fixé au premier arbre de charnière (110) et comportant une première projection suspendue (231a) ; et
- un élément d'arrêt (232) fixé au second arbre de charnière (210) et comportant une seconde projection suspendue (232a) pour venir au contact de la première projection suspendue (231a) dans une rotation de celui-ci.

4. Appareil selon la revendication 3, comprenant en outre :
- une unité d'absorption de choc (240) pour absorber un choc occasionné par un contact entre la première et le seconde projections suspendues (231a, 232a).

5. Appareil selon la revendication 4, dans lequel l'unité d'absorption de choc (240) comprend :
- un second support (241) fixé au premier support (231) et formé avec des pièces élastiques (241a, 241b), de sorte que les pièces élastiques (241a, 241b) soient disposées des deux côtés de la première projection suspendue (231a).

6. Appareil selon la revendication 4, comprenant en outre :
- un élément de support (234) pour loger le second arbre de charnière (210) à travers celui-ci et ainsi supporter l'élément d'arrêt (232) dans une direction du premier support.

7. Appareil selon la revendication 1, comprenant en outre :
- une enveloppe de charnière (400) pour entourer des parties extérieures de la première unité de charnière (100), la seconde unité de charnière (200) et l'unité de connexion de signal (300), qui sont exposées entre la première et la seconde unités électroniques.

8. Appareil selon la revendication 1, dans lequel l'unité de connexion de signal (300) comprend un câble coaxial (310) ayant une portion disposée dans le creux (210') du second arbre de charnière (210).

9. Appareil selon la revendication 8, dans lequel le câble coaxial (310) à ses deux extrémités comporte des connecteurs (311, 312) connectés avec des premier et second connecteurs de la première et de la seconde unités électroniques, respectivement.

10. Appareil selon la revendication 1, dans lequel la première unité électronique comprend un corps principal (1) pour générer une image et la seconde unité électronique comprend une unité d'affichage (2) pour afficher l'image correspondant au signal.

11. Appareil selon la revendication 1, dans lequel la première unité électronique comprend une unité d'affichage (2) pour afficher une image et la seconde unité électronique comprend un corps principal (1) pour générer un signal afin de commander l'unité d'affichage (2) pour afficher l'image.

12. Appareil selon la revendication 1, dans lequel le creux (210') est ménagé dans une direction longitudinale de la seconde unité de charnière (200).

13. Appareil selon la revendication 1, dans lequel une portion de l'unité de connexion de signal (300) est disposée de façon rotative dans le creux (210').

14. Dispositif électronique avec un appareil à charnière selon l'une des revendications précédentes, comprenant :
- une première unité électronique ;
- une seconde unité électronique ; et
- l'appareil à charnière pour connecter la première et la seconde unités électroniques pour être susceptibles d'être rotatives dans plusieurs directions l'une par rapport à l'autre.

15. Dispositif selon la revendication 14, dans lequel la première unité électronique comprend un corps principal (1) et la seconde unité électronique comprend une unité d'affichage (2).

16. Dispositif selon la revendication 14, dans lequel la première unité électronique comprend une unité d'affichage (2) et la seconde unité électronique comprend un corps principal (1).

17. Dispositif selon la revendication 15, dans lequel la première unité électronique, en outre, consiste en, ou comprend, un dispositif parmi un dispositif de photographie d'image, un téléphone mobile, un assistant numérique personnel (PDA) et un ordinateur personnel de type bloc note (PC).

18. Dispositif selon la revendication 16, dans lequel la seconde unité électronique, en outre, consiste en, ou comprend, un dispositif parmi un dispositif de photographie d'image, un téléphone mobile, un assistant numérique personnel (PDA) et un ordinateur personnel de type bloc note (PC).

19. Dispositif avec l'appareil selon la revendication 4, dans lequel une ou plusieurs de la première projection suspendue (231a), la seconde projection suspendue (232a) et l'unité d'absorption de choc (240) comprennent un élément élastique prédéterminé.

20. Procédé de support rotatif d'un dispositif électronique comportant un corps principal (1) et une unité d'affichage (2), le procédé consistant à :
- prévoir une première unité de charnière (100) comportant un premier arbre de charnière (110) connecté de façon rotative au corps principal (1) ;
- prévoir une seconde unité de charnière (200) comportant un second arbre de charnière (210) avec un creux (210') pour connecter de façon rotative le corps principal (1) et l'afficheur (2) l'un à l'autre, le second arbre de charnière (210) étant susceptible d'être rotatif sur un angle prédéterminé par rapport au premier arbre de charnière (110) ; et
- insérer une unité de connexion de signal (300) dans le creux (210') de la seconde unité de charnière (210) afin de connecter électriquement le corps principal (1) et l'unité d'affichage (2) l'un à l'autre, et
Prévoir la première et la seconde unité de charnière (100, 200) comprend insérer le second arbre de charnière (210) à travers un trou de couplage (110') du premier arbre de charnière (110) et dans lequel le trou de couplage (110') passe complètement à travers le premier arbre de charnière (110).

21. Procédé selon la revendication 20, consistant en outre à :
- absorber un choc occasionné par un contact entre une première et une seconde projections suspendues (231a, 232a) d'une unité de commande de rotation (230).
